# EUROPEAN PATENT APPLICATION

(11) **EP 4 599 992 A1**
(43) Date of publication of application: **13.08.2025**
(21) Application number: 25156952.1
(22) Date of filing: 10.02.2025
(51) Int. Cl.: B25J 9/00, B23Q 3/00, B25J 15/08, B25J 19/02, B23Q 7/10, B65D 25/04

(54) **WORKPIECE HOLDER FOR A ROBOT CELL AND A ROBOT CELL COMPRISING SUCH A WORKPIECE HOLDER**

(30) Priority: 08.02.2024 NL 2036989
(71) Applicant: AJ Nexus Ventures B.V., 6031 TW Nederweert (NL)
(72) Inventor: BIEMANS, Frank Leonardus Johannes, NEDERWEERT (NL)
(74) Representative: Algemeen Octrooi- en Merkenbureau B.V.

(57) **Abstract**

A robot cell, arranged for handling a plurality of workpieces, the robot cell comprising: an industrial robot, located within said robot cell and configured for picking up and relocating individual workpieces from said plurality of products, for example into a CNC machine comprised into said robot cell, wherein the industrial robot has a gripper, configured as end-effector of the industrial robot; a workpiece storage, located within said robot cell and configured for storage of said plurality of products; a control unit, preferably located within said robot cell and configured to control displacement of an end-effector of the industrial robot; wherein the workpiece storage comprises at least one tray serving as a workpiece carrier, wherein the tray is configured as a flexible grid with a fixed raised wall surrounding the tray, wherein at least two opposite wall sections of the raised wall contain notches for accommodating compartment dividers to allow the internal space of the tray to be divided into separate configurable sections to support one or more workpieces of the plurality of workpieces having equal dimensions, wherein the compartment dividers define mechanical stops in a first direction (X).

## Description

### Background of the invention

The invention relates to a workpiece holder for holding a plurality of workpieces as temporary storage for these workpieces. The workpieces undergo one or more processing steps such as CNC machining, and a robot of the robotic cell transfers the workpieces in between the workpiece holder and for example the CNC machine. The robot of the robot cell typically comprises a gripper with fingers to pick and place the workpieces, but may also comprise a magnetic gripper or vacuum gripper.

In the contemporary landscape of precision machining, a considerable number of high-cost CNC machines remain underutilized, experiencing periods of dormancy during nights and weekends. As such, there is an untapped potential for increased productivity which, once unlocked, has the potential to revolutionize the machining industry's operational paradigm.

Implementing robot cells in manufacturing encounters specific challenges related to limited flexibility in change-over, and handling multiple workpieces. Adapting robot cells to different tasks and workpieces often proves challenging, as the change-over process can be time-intensive and complex, hindering the swift response to evolving production demands. These difficulties requiring meticulous configuration and coordination. Moreover, efficiently handling diverse workpieces within a single robot cell demands sophisticated solutions to address variations in size, shape, and material, adding an additional layer of complexity. These challenges underscore the need for innovative approaches to enhance the adaptability, versatility, and efficiency of robot cells, ensuring they can effectively navigate the dynamic demands of modern manufacturing environments.

In a conventional robot cell, the operational framework revolves around industrial robots equipped with diverse end-effectors, facilitating tasks like machining, but may also relate to or include welding or assembly. The process begins with the secure handling of workpieces. These workpieces are typically kept in a workpiece holder wherein the workpieces or products should be located at certain predefined positions within the holder, which ensure stability and precise positioning during robotic operations. The robot's adaptability to handle multiple workpieces is a defining feature, allowing the system to efficiently navigate diverse production requirements within a single setup.

Integral to the functionality of conventional robot cells is the capability for to handle different workpieces, e.g. those which require a finger gripper, others for which a vacuum or magnetic gripper is more suitable. The robot may be outfitted with such different end-effectors tailored to specific tasks, enabling it to seamlessly transition between various grippers during the production process. This adaptability is crucial for industries where machining demands differ across workpieces or components. Programming plays a pivotal role in dictating the robot's movements, specifying the gripper to be employed, and determining the sequence of operations to accomplish the desired tasks. The flexibility inherent in these robot cells empowers them to proficiently handle distinct workpieces and execute a range of operations, minimizing downtime associated with reconfiguring the system for varied production requirements.

The workpiece holder in a robot cell plays a pivotal role in robot cell. If the cell is setup for a single type of workpiece, i.e., machining a batch of workpieces, the workpiece holder may be optimized for this particular repetitive task. However, one of the big benefits of robot cells, is their ability to handle different types of workpieces or to handle small batches of similar workpieces before change-over into a different workpiece. The workpiece holder should be compatible with all or almost all types of workpieces, and should be uniform, meaning that the position of each workpiece in the holder should be known to the robot for the end-effector to be able to pick the workpiece and for example place it into a clamp or machine vise of a CNC machine.

Workpiece holders therefore typically have a coarse grid in which the workpieces are placed at fixed positions in the grid. This makes configuration of the robotic arm easy and eases loading of the workpiece out of the workpiece holder. A workpiece holder with such a coarse grid may however also be inefficient for small workpieces.To optimize the efficiency, a less coarse grid may be chosen, which however may result in a grid which is too fine for all workpieces to fit.

To optimize between lost space and compatibility for larger workpieces, different grids may be used, or a detachable grid plate may be used and swapped for the workpiece holders to fit the workpieces which are to be processed. Having workpiece holders with a non-standardized grid however requires reconfiguration of the robot which is cumbersome.

Finally, a typical workpiece holder is non-optimal for holding two or more different types, shapes or dimensions of workpieces.

As such, there is a need for a workpiece holder in which at least some of the above-mentioned drawbacks have been resolved.

More in particular, there is a need for a workpiece holder in a robot cell that enables efficient and automated workpiece pickup with minimal reconfiguration, while ensuring precise positioning and compatibility with different gripping mechanisms.

### Summary of the invention

The object of the present invention is to provide a workpiece holder and a robot cell having such a workpiece holder that does not have at least some of these disadvantages.

This object is achieved with a robot cell, arranged for handling a plurality of workpieces, the robot cell comprising:
- an industrial robot, located within said robot cell and configured for picking up and relocating individual workpieces from said plurality of products, for example into a CNC machine comprised into said robot cell, wherein the industrial robot has a gripper, configured as end-effector of the industrial robot;
- a workpiece storage, located within said robot cell and configured for storage of said plurality of products;
- a control unit, preferably located within said robot cell and configured to control displacement of an end-effector of the industrial robot;

wherein the workpiece storage comprises at least one tray serving as a workpiece carrier,
wherein the tray is configured as a flexible grid with a fixed raised wall surrounding the tray,
wherein at least two opposite wall sections of the raised wall contain notches for accommodating compartment dividers to allow the internal space of the tray to be divided into separate configurable sections to support one or more workpieces of the plurality of workpieces having equal dimensions, wherein the compartment dividers define mechanical stops in a first direction (X).

In an example, the industrial robot has a gripper with fingers, and wherein the width of the compartment dividers corresponds or have a width larger than the width of the fingers of the gripper of the industrial robot.

In an example, the fixed raised wall and the compartment dividers have a height lower than the height of any of the plurality of products.

In an example, the workpiece storage is configured as a magazine comprising a plurality of trays.

In an example, the tray, or in dependence of the example above, the workpiece storage, is being movable in and out of the robot cell and/or between cells and/or between a warehouse and the robot cell, preferably by using a manual cart or arm, or an Autonomous Mobile Robot, AMR, or Automated Guided Vehicle, AGV.

In the landscape of modern manufacturing, robot cells have emerged as vital components, streamlining operations through the adept handling of diverse workpieces or also referred to as products. An ongoing challenge revolves around optimizing workpiece storage within these cells, especially in the context of conventional workpiece trays.

The robot cell according to the present disclosure comprises an industrial robot positioned within the robot cell. This robot is equipped with a specialized gripper featuring fingers as its end-effector. The robot may however also be equipped with other types of grippers. The industrial robot's primary function is to proficiently pick up and relocate individual workpieces from a plurality stored within the workpiece storage, thus facilitating seamless integration with downstream processes, such as CNC machining.

The workpiece storage may be considered a unit or magazine and comprises at least one tray, but thus may also comprise a number of trays, or trays configured as drawers. The workpiece storage is specifically designed to serve as a versatile (temporary) carrier for workpieces which are to be processed by for example the CNC machine.. Such workpieces may for example be a batch of metal cylinders which have to be milled to a certain shape and dimension by for example a milling machine or turning machine in the robot cell or for which the robot cell functions as its operator.

The workpiece tray according to the present disclosure may be arranged to enable movement within and outside the robot cell, as well as between different cells or a warehouse, for example preferably by using a manual cart or arm, or an Autonomous Mobile Robot, AMR, or Automated Guided Vehicle, AGV.

The tray thus forms a carrier for several workpieces, typically of different dimensions. The tray may be arranged for a single layer of workpieces, arranged along X and Y direction, but may also be arranged for stacking, i.e. multiple layers in a Z direction.

The workpiece tray is configured as a flexible grid, featuring a fixed raised wall around its periphery. Whereas conventional, known workpiece trays may be either specifically designed for a particular workpiece in accordance with its dimension and shape, or may be designed in a very uniform and compatible manner to make it suitable to hold a vast variety of workpieces, which consequently results in trays with large compartments to accommodate large workpieces, the proposed tray is configurable to not only accommodate all kinds of workpieces of different dimensions and shapes, but also does this in an efficient manner such that a maximum amount of workpieces is accommodated per tray and there is little waist of space not being used by any workpiece. Moreover, the configurable tray also allows to accommodate different workpieces with different shapes and/or dimensions within a single tray.

The tray is characterized by having at least two opposite wall sections within the fixed raised wall, for example two complete opposite side walls. Each of these side walls or wall sections contains several notches. The number of notches defines the resolution in the grid of the tray in a first direction (X) and may be distributed evenly over the complete section of part thereof. The notches may however also be distributed according to non-even interspacing.

In enhancing the adaptability or configurability of the tray configuration, alternative features to the notches can be considered for accommodating the compartment dividers. The tray may for example be arranged to incorporate shallow channels, or recessed grooves, carved into opposite walls of the tray. These grooves serve as secure channels for the placement of dividers, also allowing for dynamic reconfiguration of internal sections. The tray may also be configured for elongated openings or slot openings or simply slots, along the tray walls, providing spaces for the insertion and secure positioning of compartment dividers. Similarly, it may also comprise indentations, which introduces small, recessed areas or depressions on the tray walls, serving as anchor points for dividers and ensuring stability for reconfigurable storage.

Alternatively, partition pockets can be designed into the tray, featuring purpose-built pockets on opposite walls that securely house and guide compartment dividers. In a similar way the tray may also have channelled sections, involve defined channels carved into the tray's opposite walls, creating pathways for dividers to slide into place, thereby allowing for flexible internal section arrangements. Any of these alternatives, while functionally similar to notches, provide various configuration for achieving the reconfigurability of compartment dividers within a tray, offering flexibility in both terminology and design approach, and the skilled person will appreciate which other designs may also be suitable as such.

The notches, or other means as mentioned above, are arranged to accommodate compartment dividers. The compartment dividers serve as the element of the tray that allows the internal space of the tray to be divided into separate configurable sections, thereby selecting, either manually or automatically, section widths which correspond to the width of the workpiece it is to hold in that section. This results in little loss of space in a first direction (X) and more optimal use of space of the tray, thereby not only enabling efficient storage but also efficient transportation of one or more workpieces with equal dimensions. Hence, the tray may comprise groups of two or more workpieces of equal dimensions, which are located in the same compartment, or may even comprise none equal workpieces, all having different dimensions. Each compartment may comprise one or more workpieces of similar dimensions or two or more groups of different dimensions. The dividers also define mechanical stops in the first direction (X), enhancing precision.

Another aspect of the disclosure lies in the dimensionality of the fixed raised wall and compartment dividers. Specifically, their height is intentionally maintained lower than that of any workpiece stored within the tray. This allows a streamlined and efficient storage process of the tray, allowing for seamless movement of workpieces in and out of the tray, especially in combination with the features described below.

Moreover, in an example, the width of the compartment dividers is configured to preferably correspond to the width of the fingers of the gripper of the industrial robot. The width of the compartment dividers may however also be slightly or substantially larger, e.g. approximately 10%, 20%, 30%, 40%, 50%, 75% or more than 100% larger than the width of the fingers.. The width may however also be slightly or substantially smaller, e.g. approximately 95%, 90%, 80%, 70%, 60%, 50%, 40%, 30%, 20%, 10% or less of the width of the fingers.

This allows optimal workpiece handling since the gripper fingers to be able to pick each workpiece out of a compartment without being blocked or prevented due to insufficient spacing in between workpieces of adjacent compartments.

This works as follows; the robotic arm may move the gripper towards a single workpiece in one of the compartments and places the gripper above the product. The gripper comprises fingers, for example two on each side, which may open and close in a jaw like manner. The grippers have a width with is less than the width of the compartment dividers and the wall of the tray, and the wall of the tray and compartment dividers have a height lower than that the products. This allows the gripper to lower the fingers in between two compartments, aligned with the compartment dividers. As such, the compartments may be placed directly to or adjacent the products, resulting in little waist of space in the tray, allows configurability of the tray to accommodate several types of products, also allowing to accommodate several types within a single tray, but still allow the gripper to pick and place or load and unload workpieces into the tray efficiency and precisely.

In an embodiment, the robot cell further comprises:
- a distance sensor, arranged to determine presence and distance of workpieces in a respective compartment in a second direction (Y).

In an embodiment, the distance sensor is one of an ultrasonic sensor, infrared sensor or preferably a laser distance sensor.

One example of a distance sensor is an ultrasonic sensor. Ultrasonic sensors emit high-frequency sound waves and measure the time it takes for the sound waves to bounce back after hitting an object. Their advantages lie in their versatility, reliability, and cost-effectiveness. Ultrasonic sensors are capable of measuring distances accurately across various surfaces and materials, providing reliable data for object detection and ranging. They are also relatively affordable compared to some other distance sensing technologies, making them a preferable choice for the present application.

Another example is an infrared (IR) distance sensor. IR distance sensors use infrared light to measure the distance to an object based on the reflection of the emitted light. Their advantages include compact size, low power consumption, and suitability for proximity sensing in confined spaces.

The sensor may also be a laser distance sensor. These sensors use laser beams to measure distances with high precision. Their advantages include accuracy, long-range capabilities, and the ability to provide precise distance measurements even in challenging environments. Laser distance sensors are commonly used in industrial settings for tasks such as precision positioning, quality control, and monitoring. Their ability to operate over longer distances makes them valuable in applications where a high level of accuracy is required, as in the present application.

In an embodiment, the width of the compartment dividers has a width corresponding to the width of the fingers of the gripper of the industrial robot with an additional of + or - 1, 2, 3, 4, 5, 6, 7, 8, 9 or 10mm margin in respect of the gripper fingers.

In an embodiment, the distance sensor is disposed on a wall section of said tray, directed towards an opposite wall section.

In an embodiment, the distance sensor is disposed at or near the gripper of said industrial robot.

In an embodiment, the compartment dividers have a width of approximately 5 mm.

In an embodiment, the compartment dividers have a height of less than 10mm, more preferably, less than 8mm, even more preferably less than 6mm, and most preferably approximately 3mm.

In an embodiment, the wall sections have a height of less than 10mm, more preferably, less than 8mm, even more preferably less than 6mm, and most preferably approximately 3mm.

In an embodiment, the notches are spaced apart according to a pattern for said compartment dividers to define compartments which allow support of at least one, or two or more workpieces having equal dimensions per compartment.

In this embodiment, the notches within the flexible grid tray are strategically spaced apart according to a specific pattern designed to accommodate compartment dividers. This pattern is configured in such a way that it defines compartments capable of supporting at least one, or two or more workpieces with equal dimensions per compartment or even multiple groups of workpieces of equal dimensions per compartment. This design choice optimizes the storage capacity of the tray by efficiently utilizing the available space, allowing for the simultaneous storage and retrieval of the workpieces. The systematic arrangement of notches enhances the configurability of the tray, contributing to its adaptability for various workpiece dimensions and shapes.

In an embodiment, the notches are spaced apart according to a pattern with two alternating interval spacings.

In this embodiment, the notches are spaced apart according to a pattern with two alternating interval spacings. This alternating spacing provides additional flexibility in configuring the compartments within the tray. By incorporating two different interval spacings in the notch pattern, the tray can accommodate a variety of workpiece sizes in an optimized manner. This embodiment enhances the adaptability of the tray, allowing for the creation of compartments with different widths based on the specific needs of the workpieces to be stored. The alternating interval spacings contribute to the versatility of the tray, enabling efficient storage of diverse workpiece dimensions.

In an embodiment, the system comprises a vision system for determining one or a combination of an X and Y position of each workpiece in said tray.

In a separate embodiment, the system incorporates a vision system to determine the X and Y positions of each workpiece within the tray. This vision system adds a layer of precision and automation to the robot cell, enhancing its ability to locate and interact with individual workpieces. The vision system can provide real-time feedback on the exact positions of workpieces within the tray, facilitating accurate pick-and-place operations by the industrial robot. This embodiment contributes to the overall efficiency and reliability of the system, particularly in scenarios where precise positioning of workpieces is critical for downstream processes, such as CNC machining.

In a second aspect, there is provided, a workpiece storage for a robot cell according to the first aspect or any of the embodiments thereof, arranged for storing a plurality of products, the workpiece storage comprising:
at least one tray serving as a workpiece carrier,
wherein the tray is configured as a flexible grid with a fixed raised wall surrounding the tray,
wherein at least two opposite wall sections of the raised wall contain notches for accommodating compartment dividers to allow the internal space of the tray to be divided into separate configurable sections to support one or more workpieces of the plurality of workpieces having equal dimensions, wherein the compartment dividers define mechanical stops in a first direction (X),
and preferably, wherein the fixed raised wall and the compartment dividers have a height lower than the height of any of the plurality of products, and or preferably,
wherein the width of the compartment dividers corresponds or have a width larger than the width of the fingers of the gripper of the industrial robot.

In an example, the workpiece storage comprises a tray with a flexible grid having a fixed raised wall, wherein the tray is equipped with a plurality of positionable compartment dividers, and wherein each compartment divider is configured to define a mechanical stop in a first direction for the workpieces. It may be provided that the workpiece storage comprises a tray with a flexible grid having a fixed raised wall, and wherein the tray is equipped with a plurality of positionable compartment dividers, and wherein each compartment divider is configured to define a mechanical stop in a first direction for the workpieces. This feature provides an effect of ensuring precise positioning of the workpieces for robotic pickup, as the compartment dividers establish fixed reference points within the tray. As a result, the workpiece locations are maintained without requiring continuous recalibration or correction by the robot, which improves cycle time and reliability of automated handling operations. By defining mechanical stops, the tray remains adaptable to different workpiece sizes while maintaining structural integrity, eliminating the need for permanent fixture adaptations.

In an example, each compartment divider comprises an interlocking mechanism, such as an interlocking edge, recess, or protrusion that mechanically interfaces with the fixed raised wall of the flexible grid to define a mechanical stop in a first direction for the workpieces. The interlocking mechanism may be configured for positionable compartment dividers, which can be understood as compartment dividers which can be configured and reconfigured over time in between one or a plurality of cycles of the robot cell. It may be provided that each compartment divider comprises an interlocking edge, recess, or protrusion that mechanically interfaces with the fixed raised wall of the flexible grid to define a mechanical stop in a first direction for the workpieces. This feature provides an effect of ensuring that the dividers remain secured in place during robotic pickup, even when the gripper applies force to extract a workpiece. By engaging with the raised wall, the compartment dividers resist displacement, ensuring that workpieces do not shift unintentionally due to vibrations or movement of the robot arm. As a result, precision is improved and workpieces are prevented from misaligning within the tray, which would otherwise require the robot to perform compensatory realignments.

In an example, one or more of the position, positioning, repositioning and reconfiguration after positioning or repositioning of the compartment dividers is adjusted via an automated or semi-automated actuation system controlled by a processor, enabling dynamic and automatic or semi-automatic reconfiguration of the workpiece storage. It may be provided that the position of the compartment dividers is adjusted via an automated or semi-automated actuation system controlled by a processor, enabling dynamic reconfiguration of the workpiece storage. This feature provides an effect of eliminating the need for manual repositioning of dividers, enabling the robot cell to reconfigure the workpiece storage without user intervention. By allowing real-time compartment resizing based on the workpiece geometry, the system increases operational flexibility, enabling multiple workpiece types to be processed in a single automated cycle. By reducing manual setup time, throughput is increased and machine downtime due to changeovers is minimized.

In an example, the width of the compartment dividers corresponds to or exceeds the width of the gripping fingers of the industrial robot to facilitate unobstructed insertion and removal of workpieces. It may be provided that the width of the compartment dividers corresponds to or exceeds the width of the gripping fingers of the industrial robot to facilitate unobstructed insertion and removal of workpieces. This feature provides an effect of ensuring that the gripper can approach and extract each workpiece without interference from adjacent dividers or workpieces. By defining spacing that is optimized for robotic pickup, collision risks are minimized, and the need for complex trajectory adjustments is reduced. The spacing also allows for maximum storage density while maintaining accessibility, preventing wasted space while ensuring reliable grasping and placement operations.

In an example, the workpiece storage includes at least one sensor, selected from the group consisting of an optical camera, infrared sensor, ultrasonic sensor, or laser distance sensor, configured to detect the presence and/or dimensions of workpieces within the tray. It may be provided that the workpiece storage includes at least one sensor, selected from the group consisting of an optical camera, infrared sensor, ultrasonic sensor, or laser distance sensor, configured to detect the presence and/or dimensions of workpieces within the tray. This feature provides an effect of dynamically verifying the presence and location of workpieces before each pickup attempt, preventing misgrips and reducing cycle time due to corrective actions. By integrating real-time sensing, the robot can adjust its approach parameters based on detected variations, ensuring smooth operation even when workpieces are slightly misaligned due to manual loading variations.

In an example, the robot cell further comprises a vision system configured to determine the X-Y position of each workpiece within the tray, wherein the control system dynamically adjusts the robot's pickup trajectory based on real-time workpiece positioning data. It may be provided that the robot cell further comprises a vision system configured to determine the X-Y position of each workpiece within the tray, wherein the control system dynamically adjusts the robot's pickup trajectory based on real-time workpiece positioning data. This feature provides an effect of allowing the robotic system to compensate for small deviations in workpiece placement, ensuring consistent and accurate pickup. By automatically analyzing workpiece locations, the system avoids dependency on fixed mechanical positioning, allowing greater flexibility in how workpieces are loaded into the tray. As a result, even when a user or an automated system places dividers in any of the notches, the robot can adapt its operations accordingly, maintaining high precision without requiring predefined tray configurations.

In an example, the workpiece storage tray is dynamically reconfigurable, allowing its internal compartment structure to be adjusted in real-time based on the workpieces to be handled. It may be provided that the workpiece storage tray is dynamically reconfigurable, allowing its internal compartment structure to be adjusted in real-time based on the workpieces to be handled. This feature provides an effect of allowing the robot cell to handle different workpiece types without requiring dedicated storage trays or extensive manual setup. By supporting on-the-fly reconfiguration, the system is able to accommodate varying production requirements while maintaining optimal efficiency. The dynamic nature of the tray's configuration allows workpieces to be grouped or arranged based on real-time production needs, improving the adaptability of automated machining workflows.

In an example, the compartment dividers are manually positionable within the tray, but the robot cell is configured to automatically or semi-automatically operate using the tray in any configuration set by a user or machine. It may be provided that the compartment dividers are manually positionable within the tray, but the robot cell is configured to automatically or semi-automatically operate using the tray in any configuration set by a user or machine. This feature provides an effect of allowing users to freely define compartment arrangements while ensuring that the robotic system can still accurately identify and pick up workpieces without requiring additional calibration steps. By allowing manual adjustments while maintaining automated operational precision, the system supports both structured and adaptive workflows, making it suitable for varying production needs without loss of accuracy.

Each embodiment described in the first aspect of the invention, focusing on the robot cell with its industrial robot, flexible grid tray, and various configurations of notches for compartment dividers, is seamlessly applicable to the second aspect concerning the workpiece storage system. The versatile tray, designed with a flexible grid and a fixed raised wall, remains a central component in both aspects. The strategic spacing of notches to accommodate compartment dividers for efficient organization and support of workpieces with equal dimensions per compartment is a feature equally integral to the workpiece storage system. The adaptability of the tray, whether configured with a specific pattern for supporting pairs of workpieces or utilizing two alternating interval spacings, ensures its versatility in accommodating a diverse range of workpiece dimensions. Furthermore, the incorporation of a vision system for precise determination of workpiece positions within the tray enhances the efficiency and automation of the workpiece storage system, aligning seamlessly with the advancements described in the first aspect. Overall, each embodiment conceived for the robot cell is not only applicable but also integral to the second aspect, collectively contributing to the comprehensive and adaptable nature of the disclosed invention.

### Brief description of the drawings

Other objectives, advantages, and applications of the present invention will be made apparent by the following detailed description of a preferred embodiment of the invention. The description makes reference to the accompanying drawings in which:
FIG. 1 is a perspective view of a workpiece storage and a tray, according to the prior art;
FIG. 2 is a detailed perspective view of the grid of a tray of a workpiece storage with a fixed grid, according to the prior art;
FIG. 3 is a perspective view of a workpiece storage and a tray, according to the prior art.

### Detailed description of the drawings

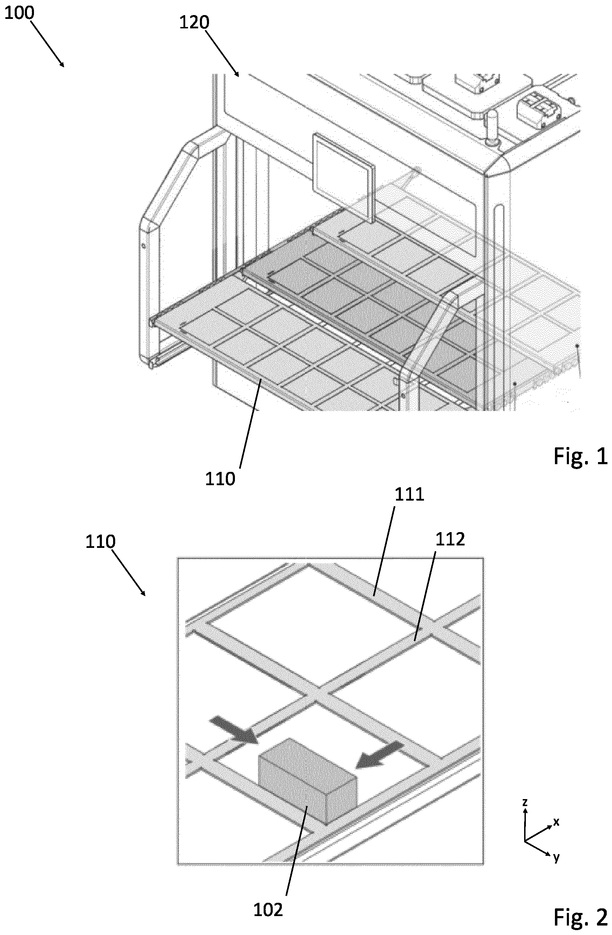

Figure 1 shows a section of a robot cell 100, and a conventional workpiece holder 120, or magazine, commonly utilized in robot cells 100, featuring a tray 110 with a fixed grid. The tray 110 shown in this figure is configured as a drawer, This fixed grid 110 serves as a structured framework for organizing workpieces, providing stability and facilitating the programming of the robotic arm for precise pick-and-place operations. However, the inherent limitation of the fixed grid design is its inability to efficiently accommodate workpieces with varying dimensions or shapes.

In Figure 2, a detailed view of the tray 110 (or drawer) of the robot cell 100 is shown, illustrating a product 102, or also referred to as a workpiece 102, meticulously positioned within a compartment of the fixed grid, aligned to the (X, Y) coordinates of the fixed grid. The fixed nature of the grid establishes predetermined positions for workpieces, ensuring uniformity but hindering adaptability to diverse workpiece sizes. The fixed grid, in X and Y direction, provide the industrial robot (not shown) a clear indication where the workpieces are located. As such, each workpiece has a fixed coordinate in at least a two-dimensional coordinate system, as each workpiece is aligned in a fixed edge of the grid, as defined by fixed spacers in a first direction X, 112, and fixed spacers in a second perpendicular direction Y, 111. As such, the spacers or dividers, 111, 112, fix the alignment and limit the positioning of the workpieces and as such, function as mechanical stops in both first, X, and second direction, Y.

Challenge arise when attempting to optimize the storage and handling of workpieces that deviate from the dimensions predefined by the fixed grid.

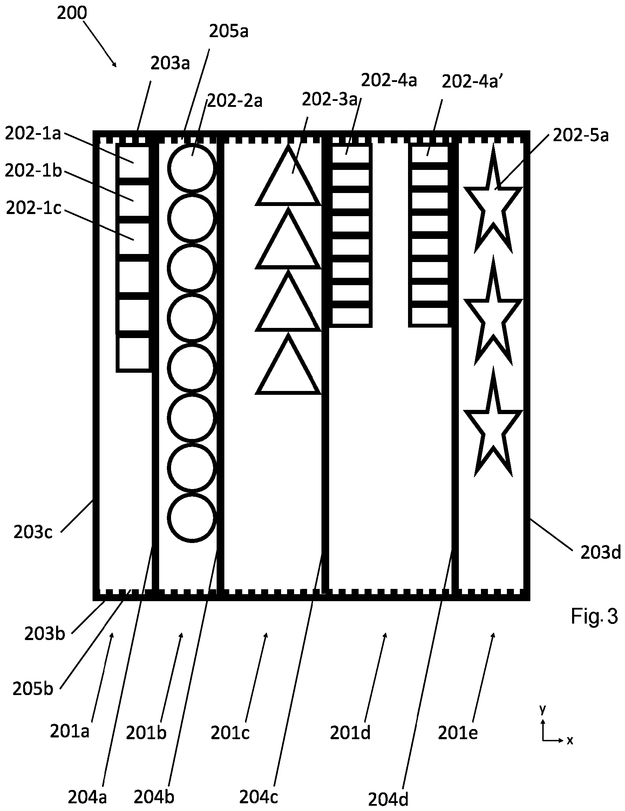

In response to the shortcomings of the conventional fixed grid, Figure 3 introduces an innovative tray 200 according to the present invention. The flexible grid of the tray 200 offers a dynamic and adaptable configuration, addressing the limitations of the fixed grid observed in Figure 1. Unlike the fixed grid, the flexible grid incorporates notches 205a, 205b in at least two opposite wall sections 203a, 204b of the raised wall 203, allowing for the insertion of compartment dividers 204a, 204b, 204c, 204d. These dividers can be adjusted in accordance with the pattern of the notches 205a, 205b, to create separate configurable sections 201a, 201b, 201c, 201d, 201e, within the tray 200, accommodating workpieces 202 of varying dimensions, 202-1, 202-2, 202-3, 202-4, 202-5, in an efficient and space-optimized manner.

The flexibility of the tray's grid in Figure 3 is a key feature, enabling the configuration of compartments sections 201a, 201b, 201c, 201d, 201e in accordance with the specific dimensions of the workpieces. This adaptability is crucial in overcoming the challenges associated with handling diverse workpieces within a single robot cell setup. The notches 205a, 205b, in the flexible grid serve as anchor points for compartment dividers 204a, 204b, 204c, 204d, providing mechanical stops in the first direction X and enhancing precision in the arrangement of workpieces.

Moving beyond the visual representations, the advantages of the flexible grid become more apparent. Unlike the fixed grid, which may require custom configurations for each workpiece type, the flexible grid allows for a universal approach. It accommodates various workpiece sizes and shapes, eliminating the need for specialized trays for different tasks. This not only simplifies the system but also enhances overall efficiency by reducing the time and effort associated with reconfiguring the robot cell for different production requirements.

The configuration of the tray 200 in Figure 3 introduces an innovative approach to workpiece storage within a tray of a robot cell. The ability to adjust the tray to different workpiece sizes, shapes, and quantities enhances the efficiency and versatility of the entire robotic system. The raised wall of the tray, along with the compartment dividers, ensures stable and secure positioning of workpieces during robotic operations, minimizing the risk of errors and optimizing the overall performance of the robot cell.

Considering the practical implications, the innovative tray design allows for optimal space utilization. In traditional fixed grid trays, there is often wasted space due to the predetermined compartment sizes. The flexible grid, on the other hand, permits the creation of customized compartments that precisely match the dimensions of the workpieces, resulting in minimal unused space and maximizing the number of workpieces that can be accommodated in a single tray.

The adaptability of the tray becomes even more pronounced when considering the handling of different workpiece types within a single tray. Traditional fixed grid trays may struggle to efficiently manage a variety of workpieces, requiring reprogramming and adjustments for each type. The flexible grid, however, enables the creation of compartments tailored to specific workpiece dimensions within the same tray, streamlining the handling of diverse workpieces without the need for extensive reconfiguration.

Additionally, the introduction of notches in the flexible grid facilitates the insertion of compartment dividers with various spacing configurations. This feature allows for the optimization of compartment sizes, providing the flexibility to accommodate different quantities of workpieces in a single tray. The systematic arrangement of notches enhances the configurability of the tray, contributing to its adaptability for various workpiece dimensions and shapes.

To further enhance the adaptability and precision of workpiece handling, the invention incorporates a distance sensor system. Figure 3 does not show the potential placement of distance sensors in respect of the tray, but the distance sensor is preferably located on the end-effector of the industrial robot, and may alternatively also be located at or near one wall of the tray, for example the bottom wall 203b and directed to measure towards 203a to be arranged to determine the presence and distance of workpieces in a specific compartment in the second direction Y. This additional layer of sensing capability adds a level of automation to the system, enabling the robot cell to dynamically adjust its operations based on real-time feedback.

Various types of distance sensors can be employed, including ultrasonic sensors, infrared sensors, or laser distance sensors. Each sensor type has its advantages, with ultrasonic sensors providing versatility, reliability, and cost-effectiveness; infrared sensors offering compact size and low power consumption; and laser distance sensors delivering high precision over longer distances. The choice of sensor type can be tailored to the specific requirements of the robot cell, ensuring accurate detection and measurement of workpiece positions within the tray.

Moreover, the width of the compartment dividers 204a, 204b, 204c, 204d in Figure 3 is configured to correspond to or be smaller or larger than the width of the fingers of the gripper of the industrial robot. This strategic design ensures optimal workpiece handling, allowing the gripper fingers to pick each workpiece out of a compartment without being blocked or prevented due to insufficient spacing between workpieces of adjacent compartments.

The functionality of the gripper is crucial in the efficient operation of the robot cell. As depicted in the description, the gripper, equipped with fingers that can open and close in a jaw-like manner, must navigate between compartments with precision. The width of the gripper fingers is carefully considered in relation to the width of the compartment dividers, allowing the gripper to lower its fingers in between two compartments aligned with the dividers. This precise alignment enables the gripper to pick and place or load and unload workpieces into the tray efficiently and precisely.

Considering practical implementations, the invention may be comprised of the use of a vision system (not shown) for determining at least the Y positions of each workpiece within the tray, as the X position is fixed and based on position of the compartment dividers 204a, 204b, 204c, 204d within the notches 205a, 205b. The vision system may however also determine X positions of each individual workpiece. This vision system, as depicted in an embodiment, adds a layer of precision and automation to the robot cell, enhancing its ability to locate and interact with individual workpieces. Real-time feedback on the exact positions of workpieces within the tray facilitates accurate pick-and-place operations by the industrial robot.

The incorporation of a vision system contributes to the overall efficiency and reliability of the system, particularly in scenarios where precise positioning of workpieces is critical for downstream processes, such as CNC machining. By determining the X and Y positions of each workpiece, the vision system enables the robot cell to adapt its movements and actions accordingly, ensuring that workpieces are handled with precision and accuracy throughout the manufacturing process.

In conclusion, the embodiment shown in Figures 3, along with the detailed description, illustrate the evolution from a conventional fixed grid workpiece holder to an innovative flexible grid tray, showcasing the advancements introduced by the present invention. The flexible grid design enhances the adaptability, efficiency, and precision of workpiece storage and handling in a robot cell, contributing to the optimization of modern manufacturing processes. The incorporation of distance sensors and a vision system further elevates the capabilities of the system, making it a comprehensive solution for the dynamic demands of modern manufacturing environments.

## Claims

1. A robot cell, arranged for handling a plurality of workpieces, the robot cell comprising:
- an industrial robot, located within said robot cell and configured for picking up and relocating individual workpieces from said plurality of products, for example into a CNC machine comprised into said robot cell, wherein the industrial robot has a gripper, configured as end-effector of the industrial robot;
- a workpiece storage, located within said robot cell and configured for storage of said plurality of products;
- a control unit, preferably located within said robot cell and configured to control displacement of an end-effector of the industrial robot;
wherein the workpiece storage comprises at least one tray serving as a workpiece carrier,
wherein the tray is configured as a flexible grid with a fixed raised wall surrounding the tray,
wherein at least two opposite wall sections of the raised wall contain notches for accommodating compartment dividers to allow the internal space of the tray to be divided into separate configurable sections to support one or more workpieces of the plurality of workpieces having equal dimensions, wherein the compartment dividers define mechanical stops in a first direction (X).

2. The robot cell according to claim 1, wherein the industrial robot has a gripper with fingers, and wherein the width of the compartment dividers corresponds or have a width larger than the width of the fingers of the gripper of the industrial robot.

3. The robot cell according to claim 1, or 2, wherein the fixed raised wall and the compartment dividers have a height lower than the height of any of the plurality of products.

4. The robot cell according to any of the previous claims, wherein the workpiece storage is configured as a magazine comprising a plurality of trays.

5. The robot cell according to any of the previous claims, wherein the tray, or in dependence of claim4, the workpiece storage, being movable in and out of the robot cell and/or between cells and/or between a warehouse and the robot cell, preferably by using a manual cart or arm, or an Autonomous Mobile Robot, AMR, or Automated Guided Vehicle, AGV.

6. The robot cell according to any of the previous claims, wherein said robot cell further comprises:
- a distance sensor, arranged to determine presence and distance of workpieces in a respective compartment in a second direction (Y).

7. The robot cell according to any of the previous claims, wherein said distance sensor is one of an ultrasonic sensor, infrared sensor or preferably a laser distance sensor.

8. The robot cell according to any of the previous claims, wherein the width of the compartment dividers has a width corresponding to the width of the fingers of the gripper of the industrial robot with an additional 1, 2, 3, 4, 5, 6, 7, 8, 9 or 10mm margin.

9. The robot cell according to any of the previous claims 6-8, wherein said distance sensor is disposed on a wall section of said tray, directed towards an opposite wall section.

10. The robot cell according to any of the previous claims 6-8, wherein said distance sensor is disposed at or near the gripper of said industrial robot.

11. The robot cell according to any of the previous claims, wherein said compartment dividers have a width of approximately 5 mm, and/or a height of less than 10mm, more preferably, less than 8mm, even more preferably less than 6mm, and most preferably approximately 3mm, and/or said wall sections have a height of less than 10mm, more preferably, less than 8mm, even more preferably less than 6mm, and most preferably approximately 3mm.

12. The robot cell according to any of the previous claims, wherein said notches are spaced apart according to a pattern for said compartment dividers to define compartments which allow support of at least one, or two or more workpieces having equal dimensions per compartment.

13. The robot cell according to any of the previous claims, wherein said notches are spaced apart according to a pattern with two alternating interval spacings.

14. The robot cell according to any of the previous claims, wherein said system comprises a vision system for determining one or a combination of an X and Y position of each workpiece in said tray.

15. A workpiece storage for a robot cell according to any of the previous claims 1-14, arranged for storing a plurality of products, the workpiece storage comprising:
at least one tray serving as a workpiece carrier, the tray being movable in and out of the robot cell and/or between cells and/or between a warehouse and the robot cell, preferably by using a manual cart or arm,
wherein the tray is configured as a flexible grid with a fixed raised wall surrounding the tray,
wherein at least two opposite wall sections of the raised wall contain notches for accommodating compartment dividers to allow the internal space of the tray to be divided into separate configurable sections to support one or more workpieces of the plurality of workpieces having equal dimensions, wherein the compartment dividers define mechanical stops in a first direction (X),
wherein the fixed raised wall and the compartment dividers have a height lower than the height of any of the plurality of products, and
wherein the width of the compartment dividers corresponds or have a width larger than the width of the fingers of the gripper of the industrial robot.
